# EUROPEAN PATENT SPECIFICATION

(11) **EP 4 373 141 B1**
(45) Date of publication and mention of the grant of the patent: **18.03.2026**
(21) Application number: 22855205.5
(22) Date of filing: 21.07.2022
(51) Int. Cl.: H04W 4/06

(54) **DATA COMMUNICATION METHOD AND APPARATUS**
DATENKOMMUNIKATIONSVERFAHREN UND -VORRICHTUNG
PROCÉDÉ ET APPAREIL DE COMMUNICATION DE DONNÉES

(30) Priority: 10.08.2021 CN 202110915505
(43) Date of publication of application: 22.05.2024
(60) Divisional application: 26157864.5
(73) Proprietor: Huawei Technologies Co., Ltd., Shenzhen, Guangdong 518129 (CN)
(72) Inventor: LI, Meng, Shenzhen, Guangdong 518129 (CN)
(74) Representative: Maiwald GmbH
(86) International application number: PCT/CN2022/107106
(87) International publication number: WO 2023/016222

(56) References cited:
- WO-A1-2021/069664
- WO-A1-2021/138780
- CN-A- 103 581 833
- CN-A- 109 769 150
- US-A1- 2020 351 980
- 3GPP: "3rd Generation Partnership Project; Technical Specification Group Services and System Aspects; Study on architectural enhancements for 5G multicast-broadcast services (Release 17)", 3GPP TR 23.757 V17.0.0 DRFAT 23757-H00, 31 March 2021 (2021-03-31), pages 1 - 298, XP093053435, Retrieved from the Internet <URL:https://ftp.3gpp.org/Specs/archive/23_series/23.757/23757-h00.zip 23757-h00.docx> [retrieved on 20230612]
- HUAWEI ET AL: "Support of Local MBS", vol. SA WG2, no. Elbonia; 20210517 - 20210528, 30 May 2021 (2021-05-30), XP052017513, Retrieved from the Internet <URL:https://ftp.3gpp.org/tsg_sa/WG2_Arch/TSGS2_145E_Electronic_2021-05/INBOX/S2-2104991.zip S2-2104991_4397r04.docx> [retrieved on 20210530]
- "3rd Generation Partnership Project; Technical Specification Group Services and System Aspects; Architectural enhancements for 5G multicast-broadcast services; Stage 2 (Release 17)", 3GPP STANDARD; TECHNICAL SPECIFICATION; 3GPP TS 23.247, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 7 June 2021 (2021-06-07), Mobile Competence Centre ; 650, route des Lucioles ; F-06921 Sophia-Antipolis Cedex ; France , pages 1 - 81, XP052029444

## Description

### CROSS-REFERENCE TO RELATED APPLICATIONS

This application claims priority to Chinese Patent Application No. 202110915505.0, filed with the China National Intellectual Property Administration on August 10, 2021 and entitled "DATA COMMUNICATION METHOD AND APPARATUS".

### TECHNICAL FIELD

This application relates to the field of wireless communication technologies, and in particular, to a data communication method and an apparatus.

### BACKGROUND

A unicast-based multicast transmission manner is proposed in the conventional technology. In this manner, a user plane function establishes a unicast user plane connection for a terminal device, and an access network device communicates with the terminal device through a unicast channel or a multicast channel.

In some communication scenarios, the terminal device may receive data of a local multicast and broadcast service (multicast and broadcast service, MBS). The local MBS enables a data receiver to receive different data for a same service when the data receiver moves to different areas. For example, the local MBS is for transmitting map data. An application function (application function, AF) may broadcast different local map data in the different areas. If the AF triggers update of an area of the local MBS, or the terminal device moves, the terminal device may not continue to receive the data of the local MBS, and a core network device should not continue to send the data of the local MBS to the terminal device.

However, in this communication scenario, the core network device focuses only on authorization and management control for the terminal device, cannot learn whether the terminal device can correctly receive the data of the local MBS, and therefore cannot determine whether to provide the data of the local MBS to the terminal device. This may cause a waste of transmission resources and a failure in sending the data of the MBS.

The article "3rd Generation Partnership Project; Technical Specification Group Services and System Aspects; Study on architectural enhancements for 5G multicast-broadcast services (Release 17)" (3GPP TR 23.757 V17.0.0) describes studies and evaluation of architectural enhancements to the 5G system to enable general MBS services over 5GS.

United States patent application US 2020/0351980 A1 describes a group communication service request wherein an access and mobility management function receives, from a first wireless device, a service request message requesting activation of a user plane connection of a PDU session for transmission of data packets to a wireless device group, wherein a determination is made, based on the service request message, to activate a user plane connection of the wireless device group.

### SUMMARY

This application provides a data communication method and an apparatus, to reduce a waste of transmission resources, and improve a success rate of sending data of an MBS.

The invention is set out in the appended set of claims.

### BRIEF DESCRIPTION OF DRAWINGS

FIG. 1 is a schematic diagram of an architecture of a communication system;
FIG. 2 is a schematic diagram of a communication process according to an embodiment of this application;
FIG. 3 is a schematic diagram of a communication process according to an embodiment of this application;
FIG. 4 is a schematic diagram of a communication process according to an embodiment of this application;
FIG. 5 is a schematic diagram of a communication process according to an embodiment of this application;
FIG. 6 is a schematic diagram of a communication process according to an embodiment of this application;
FIG. 7 is a schematic diagram of a communication process according to an embodiment of this application;
FIG. 8 is a schematic diagram of a communication process according to an embodiment of this application;
FIG. 9 is a schematic diagram of a communication process according to an embodiment of this application;
FIG. 10 is a schematic diagram of a structure of a communication apparatus according to an embodiment of this application;
FIG. 11 is a schematic diagram of a structure of a communication apparatus according to an embodiment of this application; and
FIG. 12 is a schematic diagram of a structure of a communication apparatus according to an embodiment of this application.

### DESCRIPTION OF EMBODIMENTS

The following further describes in detail this application with reference to the accompanying drawings.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be further used.

In addition, the word "example" in embodiments of this application is for giving an example, an illustration, or a description. Any embodiment or design scheme described as an "example" in this application should not be explained as being more preferred or having more advantages than another embodiment or design scheme. Exactly, use of the word "example" is intended to present a concept in a specific manner.

Network architectures and service scenarios described in embodiments of this application are intended to describe the technical solutions in embodiments of this application more clearly, and constitute no limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

The following explains and describes some terms in embodiments of this application, to facilitate understanding of a person skilled in the art.
(1) User equipment (user equipment, UE), also referred to as a terminal device, is a device having a wireless transceiver function, and may communicate with one or more core network (core network, CN) devices via an access network device in a radio access network (radio access network, RAN).
   The user equipment may also be referred to as an access terminal, a terminal, a subscriber unit, a subscriber station, a mobile station, a mobile console, a remote station, a remote terminal, a mobile device, a user terminal, a user agent, a user apparatus, or the like. The user equipment may be deployed on land, including indoor, outdoor, handheld, or vehicle-mounted deployment, or may be deployed on a water surface (for example, a ship), or may be deployed in the air (for example, an airplane, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital processing (personal digital assistant, PDA), or the like. Alternatively, the user equipment may be a handheld device having a wireless communication function, a computing device, another device connected to a wireless modem, a vehicle-mounted device, a wearable device, an uncrewed aerial vehicle device, a terminal in an internet of things or an internet of vehicles, a terminal in any form of a 5th generation mobile communication (5th generation, 5G) network and a future network, relay user equipment, a terminal in a future evolved public land mobile network (public land mobile network, PLMN), or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. A type, a category, or the like of the terminal device is not limited in embodiments of this application.
(2) A network device is a device that can provide a wireless access function for a terminal. The network device may support at least one wireless communication technology, for example, long term evolution (long term evolution, LTE) or new radio (new radio, NR).

The network device may include an access network device. For example, the network device includes but is not limited to a next generation base station or a next generation NodeB (generation NodeB, gNB) in a 5G network, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a mobile switching center, a small cell, or a pico cell. The network device may alternatively be a radio controller, a central unit (central unit, CU), and/or a distributed unit (distributed unit, DU) in a cloud radio access network (cloud radio access network, CRAN) scenario. Alternatively, the network device may be a relay station, an access point, a vehicle-mounted device, a terminal, a wearable device, a network device in future mobile communication, a network device in a future evolved PLMN, or the like.

It is clear that the network device may also include a core network device. For example, the core network device may include an SMF. Optionally, the core network device includes an application function (AF). It should be noted that the core network device may alternatively include no AF.

Optionally, the access network device includes a unicast access network device and/or a multicast (multicast broadcast, MB) access network device. The unicast access network device may be an access network device that supports a unicast session, or may be an access network device configured to manage a unicast session. The multicast access network device may be an access network device that supports a multicast session, or may be an access network device configured to manage a multicast session. This is not limited. Managing the multicast session may mean storing context information of the multicast session.

Optionally, the session management function includes a unicast session management function and/or a multicast session management function. The unicast session management function may be a session management function that supports the unicast session, or may be a session management function that is for managing the unicast session. The multicast session management function may be a session management function that supports the multicast session, or may be a session management function that is for managing the multicast session.

(3) A multicast session is for transmitting data of a multicast service or a multicast and broadcast service. For example, the multicast session may be a protocol data unit (PDU) session that is for transmitting multicast data. The multicast session is also referred to as a groupcast session, a broadcast session, or a multicast and broadcast service (multicast and broadcast service, MBS) session.

For example, the multicast session supports a broadcast service and/or a multicast service, and may simultaneously transmit data of the broadcast service or the multicast service to a plurality of users within a specific range. To be specific, the multicast session may implement point-to-multipoint data transmission.

A service area of a same MBS may correspond to one or more multicast groups, and/or a same multicast group may correspond to one or more service areas of an MBS. There may be one or more service areas of an MBS. The service area of the MBS is a service area in which data of the MBS can be transmitted, that is, a terminal device in the service area of the MBS can receive the data of the MBS. For example, the service area of the MBS may be indicated by using an element, for example, a cell identity list (Cell ID list) and/or a tracking area identity list (tracking area identity list, TAI list) of the multicast session.

A plurality of terminal devices that receive same multicast data may belong to one multicast group. In other words, one piece of multicast data may correspond to one multicast group or one multicast session. Optionally, the multicast session is in a one-to-one correspondence with the multicast group. A session identifier of the multicast session may be in a one-to-one correspondence with a group identifier of the multicast group. Alternatively, the multicast session and the multicast group may share one identifier, that is, the identifier may uniquely identify both the multicast session and the multicast group. In other words, the session identifier of the multicast session is the same as the group identifier of the multicast group.

It may be understood that, unless otherwise specified, in embodiments of this application, concepts of "multicast", "broadcast", and "multicast" may be used interchangeably.

The term "and/or" in this application describes an association relationship between associated objects and indicates that three relationships may exist. For example, A and/or B may indicate the following three cases: Only A exists, both A and B exist, and only B exists. The character "/" generally indicates an "or" relationship between associated objects.

In this application, "at least one" means one or more, and "a plurality of" means two or more.

In addition, it should be understood that, in description of this application, terms such as "first" and "second" are merely intended for distinguishing and description, but should not be understood as an indication or implication of relative importance, or should not be understood as an indication or implication of a sequence.

The technical solutions in embodiments of this application may be applied to various communication systems, for example, an LTE system, an LTE frequency division duplex (frequency division duplex, FDD) system, an LTE time division duplex (time division duplex, TDD) system, a 5G communication system or NR system, and another future communication system, for example, a 6G system.

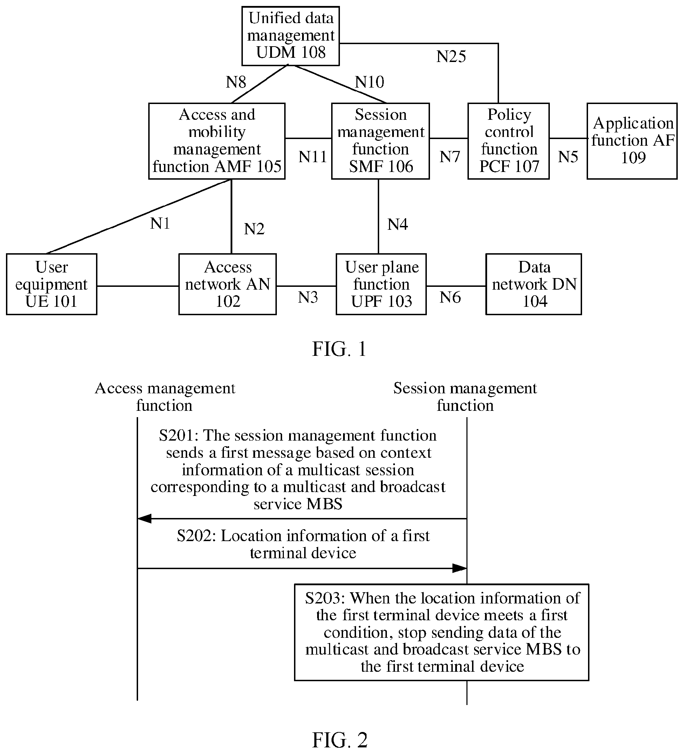

For ease of understanding embodiments of this application, a 5G network architecture shown in FIG. 1 is used as an example to describe an application scenario used in this application. FIG. 1 shows the 5G network architecture. The network architecture may include a user equipment UE 101 part, a network device part, and a data network (data network, DN) 104 part.

The network device part includes an access network (access network, AN) 102, a user plane function (user plane function, UPF) 103, an AMF 105, an SMF 106, a PCF 107, UDM 108, and the like. In the foregoing network devices, a part other than an access network 102 part may be referred to as a core network part.

A data network DN 104 is configured to provide a data transmission service for a user, and is, for example, an internet protocol multimedia subsystem (internet protocol multimedia subsystem, IMS) or an internet (Internet).

An application function AF 109 is responsible for providing a service for a 3rd generation partner project (3rd generation partnership project, 3GPP) network, for example, affecting service routing, or interacting with a PCF to perform policy control.

For example, the following briefly describes network functions in an operator network.

The AN 102 is used by the UE 101 to access the operator network. The AN may include a 3GPP NG-RAN, a non-3GPP AN, and/or the like. This is not limited herein. For example, the UE 101 is connected to a service node in the operator network through the AN 102. The AN 102 in embodiments of this application may be an access network, or may be an access network device. This is not distinguished herein. It may be understood that a specific type of the access network device is not limited in this application. In systems using different radio access technologies, devices having a function of the access network device may have different names. Optionally, in some deployments of the access network device, the access device may include a CU, a DU, and the like.

The policy control function PCF 107 is responsible for provision of policy rules, for example, a quality of service (quality of service, QoS) policy, a slice selection policy, and the like, for the access and mobility management function AMF 105 and the session management function SMF 106.

The unified data management UDM 108 is responsible for storing user data, for example, subscription data, authentication/authorization information, and the like.

The access and mobility management function AMF 105 is responsible for mobility management in a mobile network device, for example, user location update, user registration with a network, user handover, and the like.

The session management function SMF 106 is responsible for session management in a mobile network, for example, session establishment, modification, or release. A specific function includes, for example, allocating an internet protocol (internet protocol, IP) address to a user or selecting a user plane function UPF that provides a packet forwarding function.

The user plane function UPF 103 is responsible for processing a user packet, for example, forwarding or charging.

In FIG. 1, N1, N2, N3, N4, N5, N6, N7, N8, N10, N11, and N25 are interface sequence numbers. For example, for meanings of the interface sequence numbers, refer to meanings defined in a 3GPP standard protocol. The meanings of the interface sequence numbers are not limited in this application. It should be noted that, in FIG. 1, an example in which the terminal device 110 is UE is merely used for description. A name of an interface between network functions in FIG. 1 is also merely an example. During specific implementation, the name of the interface in the system architecture may be another name. This is not limited in this application.

Embodiments of this application provide a data communication method and an apparatus, which may be applied to and used in the communication system shown in FIG. 1. In the method, a session management function may trigger reporting of location information of a first terminal device based on context information of a multicast session corresponding to an MBS. After receiving the location information of the first terminal device, when the first terminal device is located outside a service area of the MBS, the session management function stops sending data of the MBS to the first terminal device. In this way, the session management function actively triggers obtaining of location information of a terminal device, to determine whether the terminal device can receive or should receive the data of the MBS at a current location, and when the terminal device cannot receive or should not receive the data of the MBS, stop sending the data of the MBS to the terminal device. This can reduce a waste of transmission resources, and improve a success rate of sending the data of the MBS. Unless otherwise specified, the MBS in embodiments of this application may include a local MBS. The local MBS may specifically mean a service scenario of the local MBS, or may mean another service scenario of an MBS that needs to be limited to area transmission.

FIG. 2 shows a possible data communication method according to an embodiment of this application. The method includes the following steps.

S201: A session management function sends a first message based on context information of a multicast session corresponding to an MBS.

Correspondingly, an access management function receives the first message.

The first message may be for triggering reporting of location information of a first terminal device.

The first terminal device belongs to a multicast group corresponding to the MBS, and the first terminal device may be one or more group members. This is not limited. For example, the first terminal device is all members or some members in the multicast group.

Specifically, that the first terminal device belongs to the multicast group corresponding to the MBS may include one or more of the following cases: The first terminal device may be a member of the multicast group that has joined the multicast session, the first terminal device may be a member that requests to join the multicast group, and the first terminal device is a member in the multicast group.

The session management function may be an SMF entity. For example, the session management function may be a unicast SMF, or may be an MB-SMF. In embodiments of this application, an example in which the session management function is the unicast SMF is used for description. The access management function may be an AMF entity.

The session management function may obtain the context information of the multicast session corresponding to the MBS from a multicast and broadcast session management function (for example, the MB-SMF). Alternatively, the session management function may obtain the context information of the multicast session corresponding to the MBS from an AF. Alternatively, the session management function may obtain the context information of the multicast session corresponding to the MBS from a network repository function (NRF). Alternatively, the session management function may obtain the context information of the multicast session corresponding to the MBS from a unified data management function (for example, UDM). Alternatively, the session management function may obtain the context information of the multicast session corresponding to the MBS from a unified data repository function (for example, URM). Alternatively, the session management function may obtain the context information of the multicast session corresponding to the MBS from a policy control function (PCF). Alternatively, the session management function may obtain the context information of the multicast session corresponding to the MBS from a network exposure function (NEF). A manner in which the session management function obtains the context information of the multicast session corresponding to the MBS is not limited herein.

The multicast session corresponding to the MBS is for transmitting data of the MBS. Generally, one multicast session corresponds to one multicast group. A terminal device may join the multicast session or the multicast group corresponding to the MBS, to receive the data of the MBS.

The context information of the multicast session corresponding to the MBS may include but is not limited to one or more of the following information: a session identifier of the multicast session, a group identifier of the multicast group, a multicast session type of the multicast group, first indication information indicating to obtain location information of the terminal device, information about a service area of the MBS, a service type (service type), QoS flow information (for example, guaranteed flow bit information) of the multicast session, and the like. The multicast session type of the multicast group includes a local MBS and the like. The service type indicates a unicast service or a multicast service. The context of the multicast session may also be referred to as context information corresponding to the multicast group. The information about the service area of the MBS may be indicated by using an element, for example, a cell ID list and/or a TAI list of the multicast session.

In an example, in S201, the session management function may determine, based on the context information of the multicast session corresponding to the MBS, whether the location information of the terminal device needs to be obtained. When determining that the location information of the terminal device needs to be obtained, the session management function sends the first message, to trigger obtaining of the location information of the terminal device.

In an implementation, if the context information of the multicast session includes the multicast session type of the multicast group, and the type is a type of local MBS, the session management function may send the first message to the access management function. In other words, when the type is the type of local MBS, the session management function may determine that the location of the first terminal device needs to be obtained, to trigger obtaining of the location of the first terminal device.

In another implementation, if the context information of the multicast session includes the first indication information, and the first indication information indicates to obtain the location information of the first terminal device, the session management function may send the first message to the access management function. In other words, when the first indication information indicates to obtain the location information of the first terminal device, the session management function may determine that a location of the first terminal device needs to be obtained, to trigger obtaining of the location of the first terminal device.

In still another implementation, if the context information of the multicast session includes the information about the service area of the MBS, the session management function may send the first message to the access management function. In other words, when the context information includes the information about the service area of the MBS, the session management function may determine that the location information of the first terminal device needs to be obtained, to trigger obtaining of the location of the first terminal device. Optionally, the session management function may further determine, based on the information (for example, the cell ID list and/or the TAI list) about the service area of the MBS, that the multicast session corresponds to the local MBS.

In still another implementation, if the context information of the multicast session includes that the service type (service type) is the multicast service, and the context information of the multicast session includes the information about the service area of the MBS, the session management function may send the first message to the access management function. In other words, in this case, the session management function may determine that the location information of the first terminal device needs to be obtained, to trigger obtaining of the location of the first terminal device.

Optionally, before the session management function sends the first message, the session management function may further send the first message to the access management function based on an MBS capability of an access network device. The access network device herein may correspond to an access network device on which the terminal device currently camps. For example, when the access network device on which the terminal device currently camps does not support the MBS (or when the access network device on which the terminal device currently camps does not support receiving and sending the data of the MBS in a multicast manner), the session management function sends the first message to the access management function. For another example, when the terminal device receives the data of the MBS through individual delivery (individual delivery), the session management function sends the first message to the access management function. Individual delivery may be a unicast manner, or may be 5GC individual MBS traffic delivery (5GC individual MBS traffic delivery), or the like.

The first message is for triggering reporting of the location information of the first terminal device. Then, the session management function may determine, based on the location information of the first terminal device, whether the first terminal device needs to receive or should continue to receive the data of an MBS, and whether the first terminal device can receive the data of the MBS.

Optionally, the first message carries identification information of the first terminal device or identification information of the multicast group corresponding to the MBS. For example, when the first terminal device is all the members in the multicast group corresponding to the MBS, the first message may carry the identification information of the multicast group. The identification information of the first terminal device may be one or more of the following information: an IP address of the first terminal device, a globally unique temporary UE identity (globally unique temporary UE identity, GUTI), an international mobile subscriber identity (international mobile subscriber identification number, IMSI), a temporary mobile subscriber identity (temporary mobile subscriber identity, TMSI), a subscription permanent identifier (subscription permanent identifier, SUPI), a subscription concealed identifier (subscription concealed identifier, SUCI), and the like. The identification information of the multicast group may be one or more of the following information: the session identifier of the multicast session, an IP address of the multicast group, a temporary mobile group identifier (temporary mobile group identifier, TMGI), and the like.

For example, the first message may be a subscription message. The subscription message is for subscribing to the location information of the first terminal device. Optionally, the subscription message may carry the information about the service area of the MBS. In this way, the session management function can determine, based on the information about the service area of the MBS, whether the service area of the MBS is updated. The session management function can further determine, based on the location of the first terminal device and the service area of the MBS, whether the first terminal device is located within the service area of the MBS or outside the service area of the MBS.

Optionally, before S201, the session management function may further receive information that the first terminal device requests to join the multicast session or the multicast group, indication information for updating the service area of the MBS, the information about the service area of the MBS, and the like.

For example, the session management function may receive a second message from the first terminal device. The second message is for requesting to join the multicast session or the multicast group. Optionally, the second message may carry the identification information of the multicast group or the session identifier of the multicast session. The second message may further carry the location information of the first terminal device.

For another example, the session management function may receive a third message from a multicast and broadcast session management function. The third message is for updating the service area of the MBS. Optionally, the third message may carry the identification information of the multicast group or the session identifier of the multicast session. The third message may further carry information about an updated service area of the MBS (which is described as information about a new service area of the MBS).

For another example, the session management function may receive the information about the service area of the MBS sent by a multicast and broadcast session management function. Alternatively, the session management function may receive the information about the service area of the MBS sent by the UDR. Alternatively, the session management function may receive the information about the service area of the MBS sent by the UDM. Alternatively, the session management function may receive the information about the service area of the MBS sent by the PCF. Unless otherwise specified, the information about the service area of the MBS in embodiments of this application may be initially provided information about the service area, or may be the information about the new service area.

In a possible implementation, the first message may be an N11 message. For example, the session management function invokes a service (Namf_Communication_N1N2MessageTransfer) that is for transmitting an N1N2 message and that is provided by an AMF interface for a communication service.

S202: The access management function sends the location information of the first terminal device.

Correspondingly, the session management function receives the location information of the first terminal device.

The location information of the first terminal device may be information that indicates a location of the first terminal device, or may be indication information that indicates that the first terminal device is located outside or within the service area of the MBS. The location of the first terminal device may be a latest location. The location of the first terminal device may be indicated by using one or more of the following information: a current geographical location (for example, longitude and latitude coordinates) of the first terminal device, the IP address of the first terminal device, a cell on which the first terminal device currently camps, a base station on which the first terminal device currently camps, and the like.

Optionally, the session management function may further receive the information about the service area of the MBS sent by the multicast and broadcast session management function. The multicast and broadcast session management function may obtain the information about the service area of the MBS. The multicast and broadcast session management function may obtain the information about the service area of the MBS from the NRF, the NEF, the PCF, the AF, or locally.

An occasion at which the multicast and broadcast session management function sends the information about the service area of the MBS to the session management function is not limited herein. For example, the multicast and broadcast session management function may store a session status of the multicast session. When the session status is an activated state, the multicast and broadcast session management function sends the information about the service area of the MBS to the session management function. When the session status is a deactivated state, the multicast and broadcast session management function does not send the information about the service area of the MBS to the session management function, or the multicast and broadcast session management function may wait until the multicast session is about to be activated (for example, when an activation request or an activation notification is received) or is in an activated state, the multicast and broadcast session management function sends the information about the service area of the MBS to the session management function. For example, the multicast and broadcast session management function may send an information notification message (Nmbsmf_Information_Notify) to the session management function. Nmbsmf_Information_Notify carries the information about the service area of the MBS.

The access management function may obtain the location information of the first terminal device. In a possible manner, after receiving the first message, the access management function sends a location reporting control (Location Reporting Control) message to the access network device. Then, the access management function receives a location report (Location Report) message sent by the access network device, to obtain latest location information of the first terminal device.

S203: When the location information of the first terminal device meets a first condition, the session management function stops sending the data of the MBS to the first terminal device.

The first condition may be that the location information indicates the location of the first terminal device, and the session management function determines, based on the location of the first terminal device, that the first terminal device is located outside the service area of the MBS. Alternatively, the first condition may be that the location information indicates that the first terminal device is located outside the service area of the MBS.

When the location of the first terminal device meets the first condition, the session management function may stop sending the data of the MBS to the first terminal device in one or more of the following manners. Optionally, in the following manners, the session management function may further send the information about the service area of the MBS to the first terminal device.

Manner 1: The session management function notifies a user plane function (for example, a UPF) to stop sending the data of the MBS to the first terminal device. In this manner, the user plane function may not deliver the data of the MBS.

Manner 2: The session management function sends a fourth message to the access network device, where the fourth message is for triggering the access network device to delete information about the first terminal device from the context information corresponding to the multicast group. The information about the first terminal device may include but is not limited to one or more of the following information: a device identifier of the first terminal device, the location of the first terminal device, and context information of the first terminal device. The context information of the first terminal device may include but is not limited to one or more of the following information: the device identifier of the first terminal device, the cell on which the first terminal device currently camps, the base station on which the first terminal device currently camps, the IP address of the first terminal device, the location information of the first terminal device, information about a multicast group that the first terminal device joins, and the like.

Manner 3: The session management function sends a fifth message to the access network device, where the fifth message is for triggering the access network device to delete information about the multicast group from context information of the first terminal device. The information about the multicast group includes but is not limited to one or more of the following information: the identification information of the multicast group, information about a unicast QoS flow corresponding to the multicast group, and the like. The unicast QoS flow corresponding to the multicast group is a unicast QoS flow that is for transmitting the data of the MBS. A QoS flow may be uniquely identified by using identification information (QoS Flow ID, QFI) of the QoS flow.

Manner 4: The session management function sends a sixth message to the access network device, where the sixth message indicates the access network device to stop sending the data of the MBS to the first terminal device. In the method, the user plane function can send the data of the MBS to the access network device, but the access network device does not deliver the data of the MBS.

It should be noted that, that the session management function sends the fourth message/the fifth message/the sixth message to the access network device may mean that the session management function directly sends the fourth message/the fifth message/the sixth message to the access network device, or may mean that the session management function sends information in the fourth message/the fifth message/the sixth message to the access network device by using the access management function (that is, the access management function re-determines and delivers a message based on the information in the fourth message/the fifth message/the sixth message sent by the session management function).

In this embodiment, the session management function can actively trigger, based on context information of the terminal device, obtaining of the location information of the terminal device, to determine whether the terminal device can receive or should continue to receive the data of the MBS at the current location, and when the terminal device cannot receive or should not continue to receive the data of the MBS, stop sending the data of the MBS to the terminal device. This can reduce a waste of transmission resources, and improve a success rate of sending the data of the MBS.

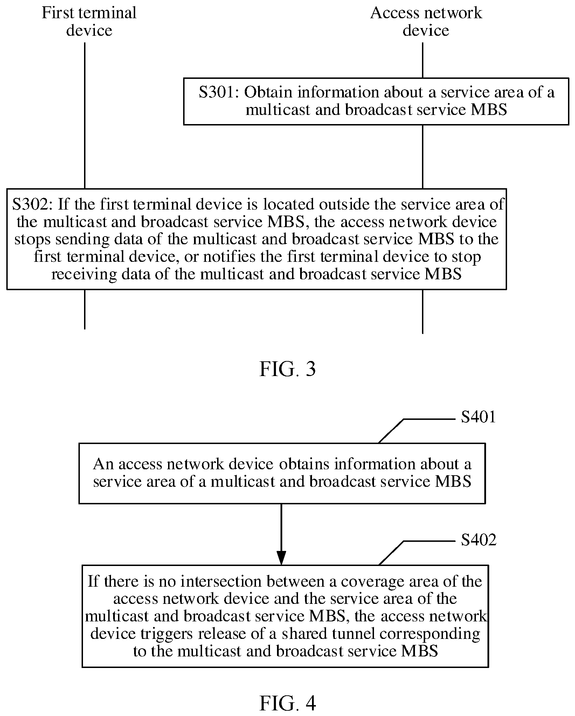

FIG. 3 shows a possible data communication method according to an embodiment of this application. The method includes the following steps.

S301: An access network device obtains information about a service area of an MBS.

In S301, in a possible implementation, the access network device obtains the information about the service area of the MBS from a multicast and broadcast session management function, a session management function, an NRF, an NEF, UDM, a UDR, or an AF. Optionally, the multicast and broadcast session management function may actively send the information about the service area of the MBS to the access network device. Alternatively, the multicast and broadcast session management function may send the information about the service area of the MBS to the access network device after receiving an information obtaining request from the access network device. An occasion at which the multicast and broadcast session management function sends the information about the service area of the MBS is not limited in embodiments of this application.

For example, the multicast and broadcast session management function may send the information about the service area of the MBS to an access management function, and the access management function sends the information about the service area of the MBS to the access network device. For example, the multicast and broadcast session management function may send a reception request response message (Nmbsmf_Reception_Request Response) or a reception start response message (Nmbsmf_Reception_Start Response) to the access management function. The Nmbsmf_Reception_Request response or the Nmbsmf_Reception_Start response carries the information about the service area of the MBS.

S302: If a first terminal device is located outside the service area of the MBS, the access network device stops sending data of the MBS to the first terminal device, or notifies the first terminal device to stop receiving data of the MBS.

The access network device may obtain a location of the first terminal device, and may obtain the information about the service area of the MBS in S301. Therefore, the access network device may determine that the first terminal device is located outside or within the service area of the MBS.

When the first terminal device is located outside the service area of the MBS, the access network device may stop sending the data of the MBS to the first terminal device in one or more of the following manners. Optionally, in the following manners, the access network device may further send the information about the service area of the MBS to the first terminal device.

Manner 1: The access network device sends a seventh message to the session management function, where the seventh message is for triggering the session management function to configure the first terminal device to stop receiving the data of the MBS. The seventh message may further include a session identifier, for example, a TMGI, of a multicast session. After receiving the seventh message, the session management function may stop sending the data of the MBS to the first terminal device. For details, refer to S203. Details are not described herein again.

Manner 2: The access network device sends location information of the first terminal device to the session management function, and receives an eighth message from the session management function, where the eighth message is for triggering the access network device to delete information about the first terminal device from context information corresponding to a multicast group. The access network device deletes, based on the eighth message, the information about the first terminal device from the context information corresponding to the multicast group.

Manner 3: The access network device sends location information of the first terminal device to the session management function, and receives a ninth message from the session management function, where the ninth message is for triggering the access network device to delete information about a multicast group from context information of the first terminal device. The access network device deletes the information about the multicast group from the context information of the first terminal device based on the ninth message.

Manner 4: The access network device releases or deletes context information of the first terminal device.

When the first terminal device is located within the service area of the MBS, the access network device may notify, in the following manner, the first terminal device to stop receiving the data of the MBS: The access network device sends a tenth message to the first terminal device, where the tenth message is for configuring the first terminal device to stop receiving the data of the MBS. If a user plane function subsequently sends the data of the MBS to the first terminal device, the first terminal device may refuse to receive the data of the MBS, or the first terminal device may not process the received data of the MBS.

It should be noted that, that the session management function sends the eighth message/the ninth message/the tenth message to the access network device may mean that the session management function directly sends the eighth message/the ninth message/the tenth message to the access network device, or may mean that the session management function sends information in the eighth message/the ninth message/the tenth message to the access network device by using the access management function (that is, the access management function re-determines and delivers a message based on the information in the eighth message/the ninth message/the tenth message sent by the session management function).

In this embodiment, the access network device can determine whether a terminal device can receive or should continue to receive the data of the MBS at a current location, and when the terminal device cannot receive or should not continue to receive the data of the MBS, stop sending the data of the MBS to the terminal device or notify the terminal device to stop receiving the data of the MBS. This can reduce a waste of transmission resources, and improve a success rate of sending the data of the MBS.

FIG. 4 shows a possible data communication method according to an embodiment of this application. The method includes the following steps.

For a process of S401, refer to S301. A similarity is not described again.

S402: If there is no intersection between a coverage area of the access network device and the service area of the MBS, the access network device triggers release of a shared tunnel (shared tunnel) corresponding to the MBS.

It should be noted that the shared tunnel is established between a multicast and broadcast user plane function (for example, an MB-UPF entity) and the access network device (for example, a RAN), and is for transmitting data of the MBS. The access network device herein may be only an access network device having an MBS capability (that is, supporting a multicast manner). The shared tunnel may correspond to an N3mb reference point described in a standard. The shared tunnel may be only for transmitting downlink data.

The multicast and broadcast user plane function sends the data of the MBS to the access network device through the shared tunnel. Then, the access network device may send, in a point-to-point (Point-to-Point) transmission manner and/or a point-to-multipoint (Point-to-Multipoint) transmission manner, the data of the MBS to a terminal device that camps on the access network device and that joins a multicast session.

The shared tunnel may be based on a general packet radio service (general packet radio service, GPRS) tunneling protocol-user plane (GPRS Tunneling Protocol-user plane, GTP-U) protocol. In an implementation of the shared tunnel, the MB-UPF may establish a shared tunnel for each access network device. In other words, for example, the MB-UPF sends the data of the MBS to each RAN when the access network device does not support the multicast manner (which is also referred to as receiving of IP multicast data) or a transport network (transport network) (namely, a network from the MB-UPF to the RAN) does not support the multicast manner (which is also referred to as transmission of IP multicast data). In another implementation of the shared tunnel, the MB-UPF sends one piece of data of the MBS. The multicast data is replicated at a router in a transport network. Finally, copies of the data arrive at different access network devices. For example, in this implementation, the access network device supports receiving of IP multicast data, and the transport network supports transmission of the IP multicast data.

The coverage area of the access network device includes a cell (cell) or a tracking area (tracking area, TA) of the access network device. The access network device may provide a service for a terminal device in the cell or the tracking area in the coverage area of the access network device. That there is no intersection between the coverage area of the access network device and the service area of the MBS includes:
none of cells or tracking areas of the access network device is located within the service area of the MBS; or
none of cells or tracking areas in which the access network device provides a coverage service is located within the service area of the MBS; or
none of cells or tracking areas that are available to the access network device is located within the service area of the MBS; or
none of cells or tracking areas included in the access network device is located within the service area of the MBS.

For triggering, by the access network device, release of the shared tunnel corresponding to the MBS, refer to descriptions in a 3GPP standard. Details are not described herein again.

In this embodiment, when there is no intersection between the coverage area of the access network device and the service area of the MBS, the access network device can trigger a procedure of releasing the shared tunnel, so that the terminal device in the coverage area of the access network device does not receive the data of the MBS. This can reduce a waste of transmission resources, and improve a success rate of sending the data of the MBS.

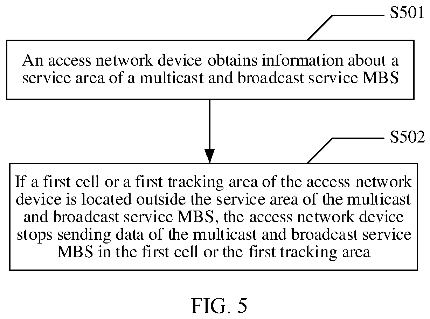

FIG. 5 shows a data communication method according to an embodiment of this application. The method includes the following steps.

For a process of S501, refer to S301. A similarity is not described again.

S502: If a first cell or a first tracking area of the access network device is located outside the service area of the MBS, the access network device stops sending data of the MBS in the first cell or the first tracking area.

When the first cell or the first tracking area of the access network device is located outside the service area of the MBS, a terminal device in the first cell or the first tracking area cannot receive the data of the MBS.

When the first cell or the first tracking area of the access network device is located outside the service area of the MBS, the access network device stops, in one or more of the following manners, sending the data of the MBS in the first cell or the first tracking area. Optionally, in the following manners, the access network device may further send the service area of the MBS to the terminal device in the first cell or the first tracking area.

Manner 1: The access network device sends an eleventh message to the session management function, where the eleventh message is for triggering the session management function to configure the terminal device in the first cell or the first tracking area to stop receiving the data of the MBS. The eleventh message may further include a session identifier of a multicast session. After receiving the eleventh message, the session management function may stop sending the data of the MBS to the terminal device in the first cell or the first tracking area. For details, refer to S203. Details are not described herein again.

Manner 2: The access network device deletes information about the terminal device in the first cell or the first tracking area from context information corresponding to a multicast group. Optionally, the access network device may send, to the session management function, location information of the terminal device in the first cell or the first tracking area or indication information indicating that the first cell or the first tracking area is located outside the service area of the MBS. The access network device receives a twelfth message from the session management function. The twelfth message is for triggering the access network device to delete the information about the terminal device in the first cell or the first tracking area from the context information corresponding to the multicast group.

Manner 3: The access network device deletes information about a multicast group from context information of the terminal device in the first cell or the first tracking area. Optionally, the access network device may send, to the session management function, location information of the terminal device in the first cell or the first tracking area or indication information indicating that the first cell or the first tracking area is located outside the service area of the MBS. The access network device receives a thirteenth message from the session management function. The thirteenth message is for triggering the access network device to delete the information about the multicast group from the context information of the terminal device in the first cell or the first tracking area.

Manner 4: The access network device releases or deletes context information of the terminal device in the first cell or the first tracking area.

It should be noted that, that the session management function sends the eleventh message/the twelfth message/the thirteenth message to the access network device may mean that the session management function directly sends the eleventh message/the twelfth message/the thirteenth message to the access network device, or may mean that the session management function sends information in the eleventh message/the twelfth message/the thirteenth message to the access network device by using the access management function (that is, the access management function re-determines and delivers a message based on the information in the eleventh message/the twelfth message/the thirteenth message sent by the session management function).

In this embodiment, when the first cell or the first tracking area is located outside the service area of the MBS, a terminal device camping on the first cell or the first tracking area cannot receive or should not continue to receive the data of the MBS. Therefore, the access network device can stop sending the data of the MBS to the first cell or the first tracking area. This can reduce a waste of transmission resources, and improve a success rate of sending the data of the MBS.

In embodiments of this application, if there is no special description or logic conflict, terms and/or descriptions between different embodiments are consistent and may be mutually referenced, and technical features in different embodiments may be combined to form a new embodiment based on an internal logical relationship thereof.

The following describes the foregoing communication manner by using several specific communication procedures.

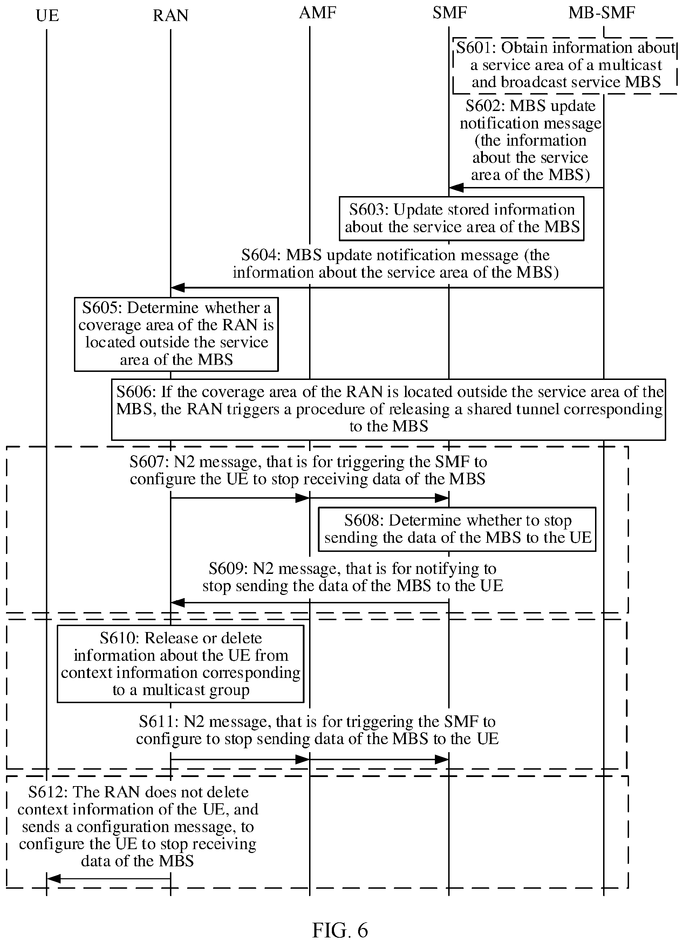

FIG. 6 shows a possible communication procedure according to an embodiment of this application. The procedure includes the following steps.

S601: An MB-SMF obtains information (MBS service area) about a service area of an MBS.

S601 is an optional step. For example, when a multicast session of a local MBS is in an active state, the MB-SMF performs S601. When a multicast session of the local MBS is in an inactive state, the MB-SMF does not perform S601.

Optionally, the information about the service area of the MBS is initially provided information about the service area of the MBS, or information about an updated service area of the MBS.

S602: The MB-SMF sends an MBS update notification message (MBS update notification) to an SMF, where the MBS update notification message includes the information about the service area of the MBS.

Alternatively, the information about the service area of the MBS may be carried in an information notification message (Nmbsmf_Information_Notify).

S603: The SMF updates stored information about the service area of the MBS based on the received information about the service area of the MBS.

S604: The MB-SMF sends an MBS update notification message (MBS update notification) to a RAN, where the MBS update notification message includes the information about the service area of the MBS.

Generally, when the service area of the MBS is updated, the MB-SMF sends the information about the service area of the MBS to the RAN. The information about the service area of the MBS is the information about the updated (new/updated) service area of the MBS.

For example, the MB-SMF may send a reception request response message (Nmbsmf_Reception_Request Response) to an AMF. The reception request response message includes the information about the service area of the MBS, and the AMF sends the information about the service area of the MBS to the RAN.

S605: The RAN determines whether a coverage area of the RAN is located outside the service area of the MBS.

For a process of S605, refer to S402. Details are not described herein again.

S606: If the coverage area of the RAN is located outside the service area of the MBS, the RAN triggers a procedure of releasing a shared tunnel corresponding to the MBS.

Optionally, after receiving the information about the service area of the MBS, the RAN may send an MBS update notification response message (MBS update notification response) to the MB-SMF.

When the coverage area of the RAN is located outside the service area of the MBS, or UE is located outside the service area of the MBS, the RAN may trigger one or more pieces of UE to stop receiving data of the MBS. Specifically, for triggering, by the RAN, the UE to stop receiving the data of the MBS, refer to the following implementation 1 (S607 to S609), or refer to the following implementation 2 (S610 and S611), or refer to the following implementation 3 (S612).

S607: The RAN sends an N2 message to the SMF, to trigger the SMF to configure the UE to stop receiving the data of the MBS.

The N2 message includes a session identifier (PDU Session ID) of a PDU session and N2 information. Optionally, the N2 information may include a session identifier (MBS Session ID), for example, a TMGI, of the multicast session. The N2 information may further include indication information indicating that the UE is located outside the service area of the MBS, and/or location information (for example, an identifier (cell ID) of a cell on which the UE currently camps, or an identifier (TA ID) of a tracking area on which the UE currently camps) of the UE.

The RAN may determine to stop sending the data of the MBS to the UE, and send the N2 message. For example, the RAN determines, based on the location information of the UE and the information about the service area of the MBS, whether to stop sending the data of the MBS to the UE, or determines, based on the indication information indicating that the UE is located outside the service area of the MBS, whether to stop sending the data of the MBS to the UE.

S608: The SMF determines whether to stop sending the data of the MBS to the UE.

In S608, the SMF determines, based on the location information of the UE and the information about the service area of the MBS, whether to stop sending the data of the MBS to the UE, or determines, based on the indication information indicating that the UE is located outside the service area of the MBS, whether to stop sending the data of the MBS to the UE.

Alternatively, in S608, the SMF may determine, based on the N2 message, whether to stop sending the data of the MBS to the UE.

S609: The SMF sends an N2 message to the RAN, to notify to stop sending the data of the MBS to the UE.

The N2 message may include N2 information. The N2 information includes context information of a multicast group. The context information does not include information about the multicast group (for example, information about a unicast QoS flow corresponding to the multicast group). Alternatively, the N2 information is for triggering the RAN to delete information about a unicast QoS flow corresponding to the multicast group from context information of the UE.

Optionally, the N2 message may include N1 information. The N1 information includes the information about the service area of the MBS.

S610: The RAN releases or deletes information about the UE from context information corresponding to a multicast group.

Alternatively, the RAN releases or deletes information about a multicast group from context information of the UE.

S611: The RAN sends an N2 message to the SMF, where the N2 message triggers the SMF to configure to stop sending the data of the MBS to the UE.

The N2 message carries N2 information and a session identifier of a PDU session. Optionally, the N2 information includes a session identifier of the multicast session, and/or includes indication information that is for triggering the SMF to configure to stop sending the data of the MBS to the UE.

S612: The RAN does not delete (or keeps) context information of the UE, and sends a configuration message to the UE, where the configuration message for configuring the UE to stop receiving the data of the MBS.

Alternatively, the RAN does not send the data of the MBS to the UE.

It should be noted that, in an implementation of this embodiment, steps S607 to S611 are optional steps. In some other implementations, steps S607 to S609 and S612 are optional steps. In some other implementations, steps S610 to S612 are optional steps.

In this embodiment, the RAN obtains latest location information of the UE. When the UE is located outside the service area of the MBS, the UE no longer receives the data of the MBS, without introducing additional signaling. In addition, in S612, if the RAN does not delete the context information of the UE, a ping-pong (ping-pong) effect caused by moving the UE back and forth in the service area of the MBS can be resolved, to improve stability of a communication system.

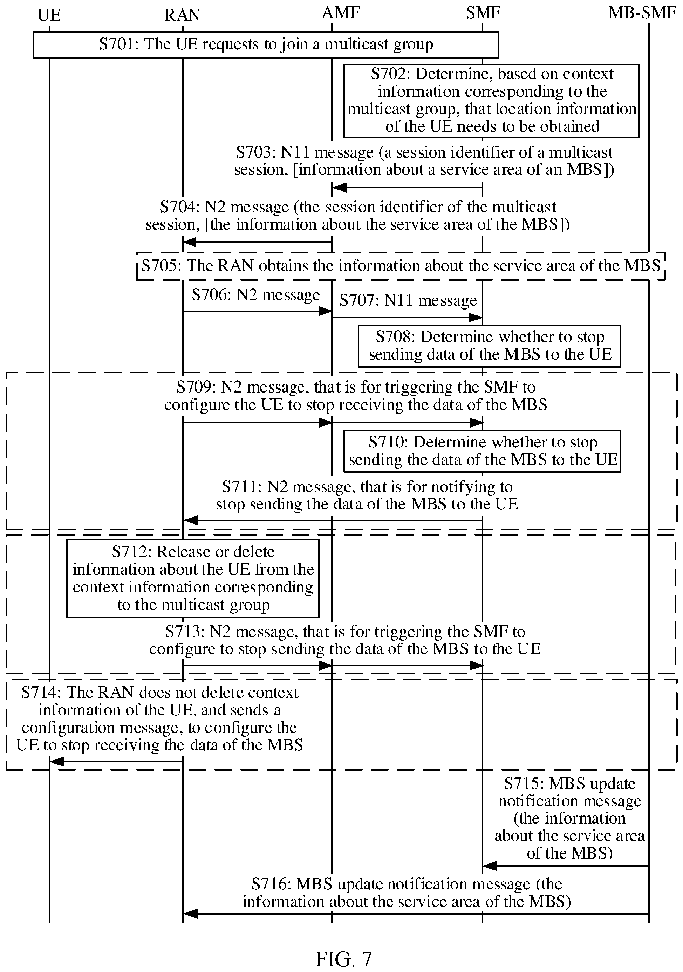

FIG. 7 shows a possible communication procedure according to an embodiment of this application. The procedure includes the following steps.

S701: UE requests to join a multicast group.

For example, the UE sends a PDU session modification request message to an SMF. The PDU session modification request message includes a session identifier (for example, a TMGI or an IP multicast address) of a multicast session.

S702: An SMF determines, based on context information corresponding to the multicast group, that location information of the UE needs to be obtained.

The SMF may obtain context information, namely, the context information corresponding to the multicast group, of the multicast session based on the session identifier of the multicast session.

For example, if the context information corresponding to the multicast group includes indication information that indicates to obtain the location information of the UE, or the context information corresponding to the multicast group includes information indicating that a multicast session type is a type of local MBS, or the context information corresponding to the multicast group includes information about a service area of an MBS, the SMF may determine that the location information of the UE needs to be obtained.

S703: The SMF sends an N11 message to an AMF, where the N11 message includes the session identifier of the multicast session, and optionally includes the information about the service area of the MBS.

If the N11 message does not include the information about the service area of the MBS, the AMF may obtain the information about the service area of the MBS based on the session identifier of the multicast session. For example, the AMF may send a query request message to a network repository function (NRF), UDM, or a PCF. The query request message includes the session identifier of the multicast session. The NRF, the UDM, or the PCF may send a query response message to the AMF. The query response message includes the information about the service area of the MBS.

Optionally, the N11 message may further include N2 information. The N2 information is forwarded by the AMF to a RAN. The N2 information includes the session identifier of the multicast session, and optionally includes the information about the service area of the MBS. In this case, the AMF may not obtain the information about the service area of the MBS.

S704: The AMF sends an N2 message to the RAN, where the N2 message includes the session identifier of the multicast session, and optionally includes the information about the service area of the MBS.

If the N2 message includes the session identifier of the multicast session, the RAN may determine whether the context information of the multicast group corresponding to the session identifier of the multicast session is stored.

If the RAN stores the context information of the multicast group corresponding to the session identifier, the RAN may detect whether one or more pieces of UE that receive the data of the MBS and that are located within a coverage area of the RAN are located within the service area of the MBS. When the UE is located outside the service area of the MBS, the RAN triggers the UE to stop receiving the data of the MBS.

If the RAN does not store the context information of the multicast group corresponding to the session identifier, the RAN may perform S705.

S705: The RAN obtains the information about the service area of the MBS.

S705 is an optional step.

The RAN may obtain the information about the service area of the MBS from an MB-SMF. For example, the RAN sends a request message to the AMF, where the request message includes the session identifier of the multicast session. Then, the AMF sends the request message to the MB-SMF, where the request message includes the session identifier of the multicast session. The MB-SMF sends the information about the service area of the MBS to the AMF. The AMF sends the information about the service area of the MBS to the RAN.

When determining that the UE is located outside the service area of the MBS, the RAN performs S706.

S706: The RAN sends an N2 message to the AMF.

The N2 message includes one or more of the following information: the location information of the UE (for example, an identity of a cell in which the UE is located), indication information indicating that the UE is located outside the service area of the MBS, identification information of the UE, and a UE list corresponding to the UE (the UE list includes a plurality of pieces of UE).

S707: The AMF sends an N11 message to the SMF.

The N11 message may be a subscription message (Namf_EventExposure_Subscribe Notify) or an update context message (Nsmf_PDUSession_UpdateSMContext request).

The N11 message includes one or more of the following information: the location information of the UE, the indication information indicating that the UE is located outside the service area of the MBS, the identification information of the UE, the UE list corresponding to the UE, and the session identifier of the multicast session.

S708: The SMF determines whether to stop sending the data of the MBS to the UE.

For a process of S709 to S714, refer to S607 to S612.

S715: When the service area of the MBS is updated, the MB-SMF may send an MBS update notification message (MBS update notification) to the SMF, where the MBS update notification message includes information about a new service area of the MBS.

The SMF may update locally stored information about the service area of the MBS based on the information about the new service area of the MBS.

S716: The MB-SMF sends the MBS update notification message (MBS update notification) to the RAN, where the MBS update notification message includes the information about the new service area of the MBS.

After receiving the information about the new service area of the MBS, the RAN may continue to detect whether the one or more pieces of UE that receive the data of the MBS and that are located within the coverage area of the RAN are located within the service area of the MBS.

In this embodiment, when the UE joins the multicast group so that the RAN establishes the context information of the multicast session, the RAN can detect whether the UE in the multicast group is located outside the service area of the MBS. When the UE moves out of the service area of the MBS, the RAN can report information about the UE that moves out of the service area of the MBS, without introducing additional signaling.

In the embodiment shown in FIG. 7, the RAN and/or the SMF can determine whether the UE moves out of the service area of the MBS. In the embodiment shown in FIG. 6, the RAN mainly determines whether the UE moves out of the service area of the MBS. Therefore, whether the RAN supports multicast is not limited in FIG. 7.

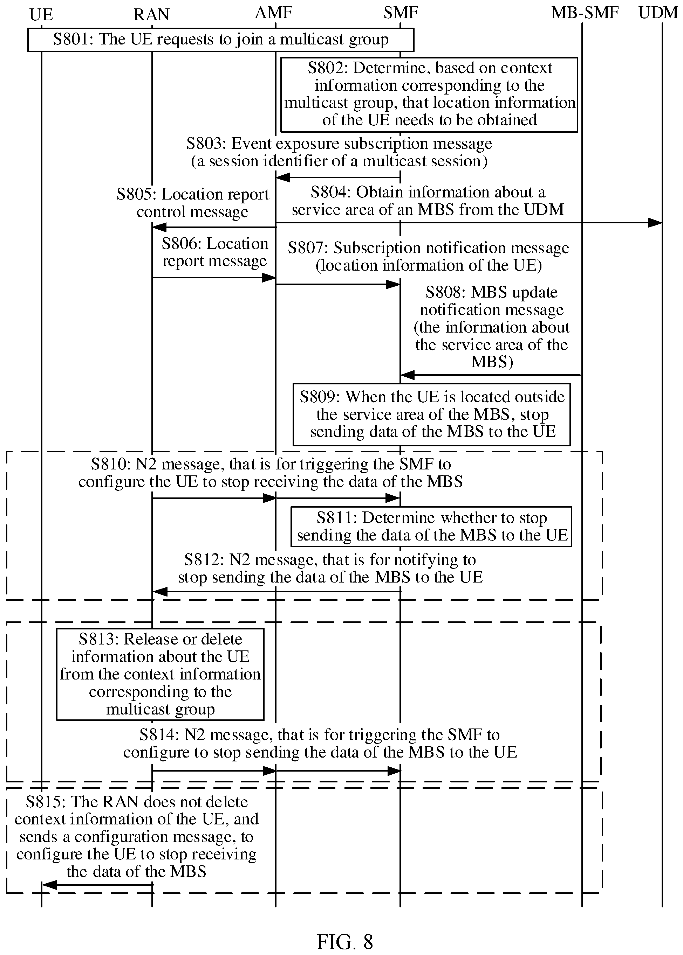

FIG. 8 shows a possible communication procedure according to an embodiment of this application. The procedure includes the following steps.

For a process of S801 and S802, refer to S701 and S702.

S803: The SMF sends an event exposure subscription message (Namf_EventExposure_Subscribe) to an AMF, where the event exposure subscription message includes the session identifier of the multicast session.

The event exposure subscription message may further include one or more of the following information: identification information of the UE and the information about the service area of the MBS.

Alternatively, the event exposure subscription message may replace a PDU session update context response message (Nsmf_PDUSession_UpdateSMContext response).

S804: The AMF obtains the information about the service area of the MBS from UDM (or an NRF or a PCF).

S805: The AMF sends a location reporting control (location reporting control) message to a RAN.

Optionally, the location report control message includes the information about the service area of the MBS.

S806: The RAN sends a location report message to the AMF.

The location report message includes the location information of the UE.

S807: The AMF sends a subscription notification message (Namf_EventExposure_Subscribe Notify) to the SMF, where the subscription notification message includes the location information of the UE.

S808: An MB-SMF sends an MBS update notification message (MBS update notification) to the SMF, where the MBS update notification message includes the information about a new service area of the MBS.

S809: When the UE is located outside the service area of the MBS, the SMF stops sending data of the MBS to the UE.

For a process of S810 to S815, refer to S607 to S612.

A communication process shown in FIG. 8 is similar to that shown in FIG. 7, and a difference lies in a message exchanged between the SMF and the AMF. In FIG. 8, whether the RAN supports multicast is not limited.

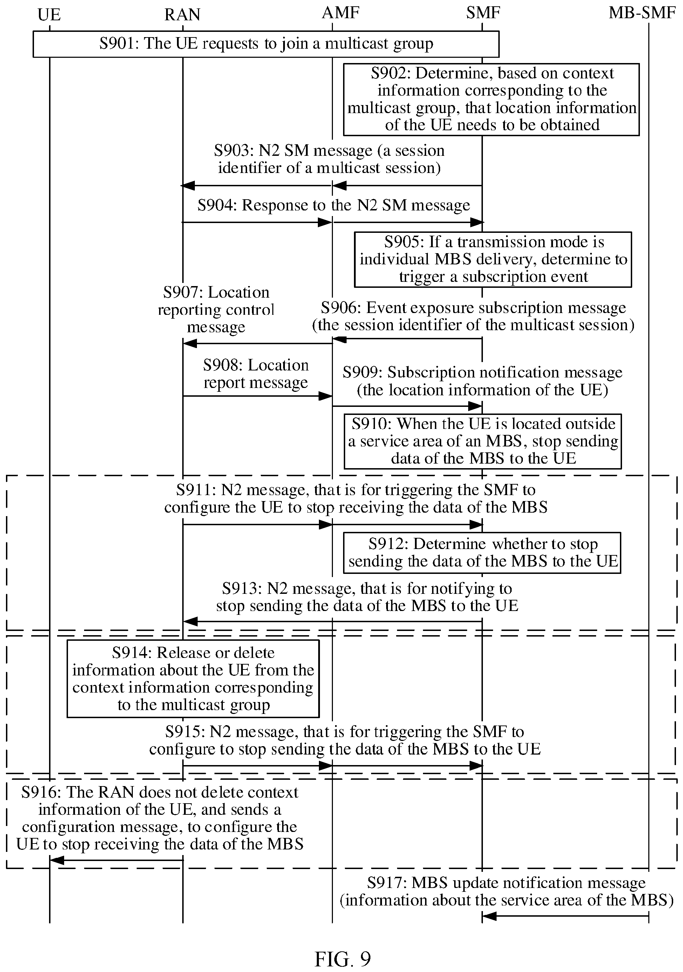

FIG. 9 shows a possible communication procedure according to an embodiment of this application. The procedure includes the following steps.

For a process of S901 and S902, refer to S701 and S702.

S903: The SMF sends an N2 SM message to a RAN, where the N2 SM message includes the session identifier of the multicast session.

S904: The RAN sends a response message of the N2 SM message to the SMF.

The response message of the N2 SM message indicates whether the RAN supports multicast.

S905: If a transmission mode is "individual MBS delivery", the SMF determines to trigger a subscription event.

If a transmission mode is not "individual MBS delivery", for example, is "Shared delivery", the SMF may determine not to trigger a subscription event.

S906: The SMF sends an event exposure subscription message (Namf_EventExposure_Subscribe) to an AMF.

The event exposure subscription message may include one or more of the following information: the session identifier of the multicast session, identification information of UE, and the information about the service area of the MBS.

For a process of S907 to S909, refer to S805 to S807.

For a process of S910 to S916, refer to S809 to S815.

For a process of S917, refer to S715.

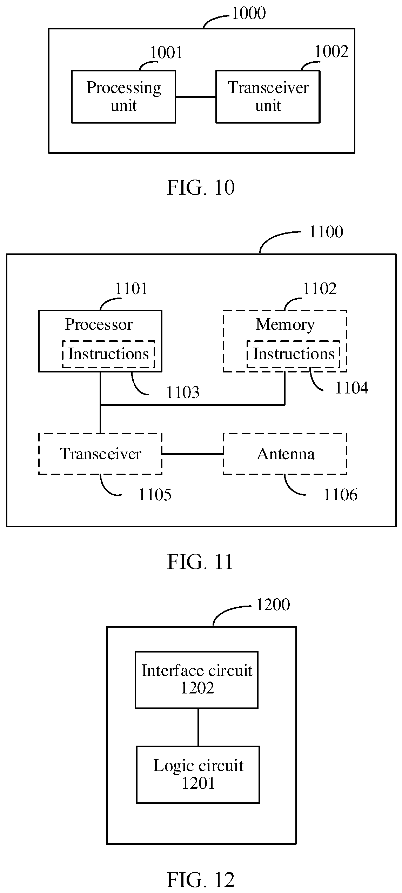

Based on a same technical concept as the foregoing data communication method, embodiments of this application further provide a communication apparatus. As shown in FIG. 10, a communication apparatus 1000 includes a processing unit 1001 and a transceiver unit 1002. The communication apparatus 1000 may be configured to implement the method described in the foregoing method embodiment. The apparatus 1000 may be used in a session management function or an access network device, or may be located in a session management function or an access network device. Optionally, a function implemented by the transceiver unit 1002 may be implemented by a communication interface.

In a possible embodiment, when the apparatus 1000 is used in the session management function, the transceiver unit 1002 is configured to: send a first message to an access management function based on context information of a multicast session corresponding to an MBS, where the first message is for triggering reporting of location information of a first terminal device, and the first terminal device belongs to a multicast group corresponding to the MBS; and receive the location information of the first terminal device from the access management function. The processing unit 1001 is configured to: when the location information indicates a location of the first terminal device, and it is determined, based on the location of the first terminal device, that the first terminal device is located outside a service area of the MBS, or the location information indicates that the first terminal device is located outside a service area of the MBS, stop sending data of the MBS to the first terminal device.

In an implementation, the first message carries identification information of the first terminal device.

In an implementation, the first message is a subscription message. The subscription message is for subscribing to the location information of the first terminal device.

In an implementation, the subscription message carries information about the service area of the MBS.

In an implementation, the transceiver unit 1002 is further configured to receive a second message from the first terminal device, where the second message is for requesting to join the multicast session; or receive a third message from a multicast and broadcast session management function, where the third message is for updating the service area of the MBS.

In an implementation, the transceiver unit 1002 is specifically configured to: if the context information includes a multicast session type of the multicast group, and the type is a type of local MBS, send the first message to the access management function; if the context information includes first indication information, and the first indication information indicates to obtain location information of a terminal device, send the first message to the access management function; if the context information includes the information about the service area of the MBS, send the first message to the access management function; or if a service type service type in the context information is a multicast service, and the context information includes the information about the service area of the MBS, send the first message to the access management function.

In an implementation, the processing unit 1001 is specifically configured to notify, by using the transceiver unit 1002, a user plane function to stop sending the data of the MBS to the first terminal device; send a fourth message to the access network device by using the transceiver unit 1002, where the fourth message is for triggering the access network device to delete information about the first terminal device from context information corresponding to the multicast group; send a fifth message to the access network device by using the transceiver unit 1002, where the fifth message is for triggering the access network device to delete information about the multicast group from context information of the first terminal device; or send a sixth message to the access network device by using the transceiver unit 1002, where the sixth message indicates the access network device to stop sending the data of the MBS to the first terminal device.

In an implementation, the information about the multicast group includes identification information of the multicast group, and/or information about a unicast QoS flow corresponding to the multicast group.

In another possible embodiment, when the apparatus 1000 is the access network device, the processing unit 1001 is configured to obtain information about a service area of an MBS. The transceiver unit 1002 is configured to: if a first terminal device is located outside the service area of the MBS, stop sending data of the MBS to the first terminal device, or notify, by using the transceiver unit 1002, the first terminal device to stop receiving data of the MBS; if there is no intersection between a coverage area of the access network device and the service area of the MBS, trigger release of a shared tunnel corresponding to the MBS; and/or if a first cell or a first tracking area of the access network device is located outside the service area of the MBS, stop sending data of the MBS in the first cell or the first tracking area.

In an implementation, the transceiver unit 1002 is specifically configured to receive the information about the service area of the MBS from a multicast and broadcast session management function.

In an implementation, the processing unit 1001 is specifically configured to: send a seventh message to the session management function by using the transceiver unit 1002, where the seventh message is for triggering the session management function to configure the first terminal device to stop receiving the data of the MBS; send location information of the first terminal device to the session management function by using the transceiver unit 1002, receive an eighth message from the session management function, and delete, based on the eighth message, information about the first terminal device from context information corresponding to a multicast group, where the eighth message is for triggering the access network device to delete the information about the first terminal device from the context information corresponding to the multicast group; send location information of the first terminal device to the session management function by using the transceiver unit 1002, receive a ninth message from the session management function, and delete information about a multicast group from context information of the first terminal device based on the ninth message, where the ninth message is for triggering the access network device to delete the information about the multicast group from the context information of the first terminal device; or release or delete context information of the first terminal device.

In an implementation, the transceiver unit 1002 is specifically configured to send a tenth message to the first terminal device. The tenth message is for configuring the first terminal device to stop receiving the data of the MBS.

In an implementation, the processing unit 1001 is specifically configured to send an eleventh message to the session management function by using the transceiver unit 1002, where the eleventh message is for triggering the session management function to configure a terminal device in the first cell or the first tracking area to stop receiving the data of the MBS; delete information about a terminal device in the first cell or the first tracking area from the context information corresponding to the multicast group; delete the information about the multicast group from context information of a terminal device in the first cell or the first tracking area; or release or delete context information of a terminal device in the first cell or the first tracking area.

It should be noted that, in embodiments of this application, division into modules is an example, is merely logical function division, and may be other division during actual implementation. In addition, functional units in embodiments of this application may be integrated into one processing unit, or may exist alone physically, or two or more units are integrated into one unit. The integrated unit may be implemented in a form of hardware, or may be implemented in a form of a software functional unit. For example, the transceiver unit may include a receiving unit and/or a sending unit.

When the integrated unit is implemented in the form of the software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, a network device, or the like) or a processor (processor) to perform all or some of the steps of the methods in embodiments of this application.

As shown in FIG. 11, an embodiment of this application further provides a schematic diagram of a structure of a communication apparatus 1100. The apparatus 1100 may be configured to implement the methods described in the foregoing method embodiments. Refer to the descriptions in the foregoing method embodiments.

The apparatus 1100 includes one or more processors 1101. The processor 1101 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The apparatus 1100 includes the one or more processors 1101. The one or more processors 1101 may implement the methods in the foregoing embodiments. Optionally, the processor 1101 may further implement another function in addition to the methods in the foregoing embodiments.

In a design, the processor 1101 may execute instructions, to enable the apparatus 1100 to perform the methods described in the foregoing method embodiments. The instructions may be all or partially stored in the processor 1101. For example, instructions 1103 may be all or partially stored in the processor 1101, or instructions 1103 are stored in the processor 1101, and instructions 1104 are stored in a memory 1102 coupled to the processor. The processor 1101 may synchronously execute the instructions 1103 and the instructions 1104, to enable the apparatus 1100 to perform the methods described in the foregoing method embodiments. The instructions 1103 and the instructions 1104 are also referred to as computer programs.

In another possible design, the communication apparatus 1100 may further include a circuit. The circuit may implement functions in the foregoing method embodiments.

In still another possible design, the apparatus 1100 may include one or more memories 1102. The memory store instructions 1104. The instructions may be run on the processor 1101, to enable the apparatus 1100 to perform the methods described in the foregoing method embodiments. Optionally, the memory 1102 may further store data. Optionally, the processor 1101 may also store instructions and/or data. For example, the one or more memories 1102 may store a correspondence described in the foregoing embodiments, or a related parameter or table in the foregoing embodiments. The processor and the memory may be separately disposed, or may be integrated together.

In still another possible design, the apparatus 1100 may further include a transceiver 1105 and an antenna 1106. The processor 1101 may be referred to as a processing unit, and is configured to control the apparatus (a terminal or a base station). The transceiver 1105 may be referred to as a transceiver machine, a transceiver circuit, a transceiver unit, or the like, and is configured to implement a transceiver function of the apparatus through the antenna 1106.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and accomplished by a hardware decoding processor, or may be performed and accomplished by using a combination of hardware in a decoding processor and a software module. The software module may be stored in a storage medium. The storage medium is located in the memory.

The memory may be a volatile memory or a non-volatile memory, or may include both volatile memory and non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and methods described in this specification is intended to include but is not limited to these memories and any other appropriate type of memory. The memory may exist independently, and is connected to the processor through a communication line. The memory may alternatively be integrated with the processor.

An embodiment of this application further provides a computer-readable medium. The computer-readable medium stores a computer program. When the computer program is executed by a computer, the data communication method in any one of the foregoing method embodiments is implemented.

An embodiment of this application further provides a computer program product, including a computer program. When the computer program is executed by a computer, the data communication method in any one of the foregoing method embodiments is implemented.

An embodiment of this application further provides a communication system, including a terminal device and a network device. The network device may include one or more of a session management function, an access network device, and an access management function. The terminal device and the network device may implement any one of the foregoing method embodiments.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instruction is loaded and executed on a computer, the procedure or functions according to embodiments of this application are all or partially generated. The computer may be the foregoing communication apparatus. The computer instruction may be stored in a computer-readable storage medium, or may be transmitted from one computer-readable storage medium to another computer-readable storage medium. The computer-readable storage medium may be the foregoing storage medium or the foregoing memory.

In a possible design, when the communication apparatus is a chip, for example, a chip in a network device or a chip in a terminal device, a determining unit or the processor 1101 may be one or more logic circuits, and a sending unit, a receiving unit, or the transceiver 1105 may be an input/output interface, or may be referred to as a communication interface, an interface circuit, an interface, or the like. Alternatively, the transceiver 1105 may be a sending unit and a receiving unit. The sending unit may be an output interface, the receiving unit may be an input interface. The sending unit and the receiving unit are integrated into one unit, for example, an input/output interface. As shown in FIG. 12, a communication apparatus 1200 includes a logic circuit 1201 and an interface circuit 1202. To be specific, the foregoing processing unit or processor 1101 may be implemented by using the logic circuit 1201, and the foregoing transceiver unit or transceiver 1105 may be implemented by using the interface circuit 1202. The logic circuit 1201 may be a chip, a processing circuit, an integrated circuit, a system on a chip (system on a chip, SoC), or the like. The interface circuit 1202 may be a communication interface, an input/output interface, or the like. In this embodiment of this application, the logic circuit and the interface circuit may be further coupled to each other. A specific manner of connecting the logic circuit to the interface circuit is not limited in embodiments of this application.

In some embodiments of this application, the logic circuit 1201 and the interface circuit 1202 may be configured to perform functions, operations, or the like performed by the foregoing session management function or access network device. The interface circuit 1202 may be configured to: receive a signal from another communication apparatus other than the communication apparatus 1200, and transmit the signal to the logic circuit 1201, or send a signal from the logic circuit 1201 to another communication apparatus other than the communication apparatus 1200. The logic circuit 1201 may be configured, by executing code instructions, to implement any one of the foregoing method embodiments.

For example, the interface circuit 1202 is configured to: send a first message to an access management function based on context information of a multicast session corresponding to an MBS, where the first message is for triggering reporting of location information of a first terminal device, and the first terminal device belongs to a multicast group corresponding to the MBS; and receive the location information of the first terminal device from the access management function. The logic circuit 1201 is configured to: when the location information indicates a location of the first terminal device, and the session management function determines, based on the location of the first terminal device, that the first terminal device is located outside a service area of the MBS, or the location information indicates that the first terminal device is located outside a service area of the MBS, stop sending data of the MBS to the first terminal device. For functions or operations performed by the communication apparatus 1200, refer to the foregoing method embodiments. Details are not described herein again.

A person of ordinary skill in the art may be aware that, in combination with the examples described in embodiments disclosed in this specification, units and algorithm steps may be implemented by electronic hardware, computer software, or a combination thereof. To clearly describe interchangeability between the hardware and the software, the foregoing has generally described compositions and steps of each example based on functions. Whether these functions are performed in a form of hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may also be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on an actual requirement, to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another place. The storage medium may be any available medium accessible to a computer.

In conclusion, the foregoing descriptions are merely embodiments of the technical solutions of this application, but are not intended to limit the protection scope of this application.

## Claims

1. A data communication method, **characterized by** comprising:
sending (S201), by a session management function (106), a first message to an access management function (105) based on context information of a managed multicast session corresponding to a multicast and broadcast service, MBS, wherein the first message is for triggering reporting of location information of a first terminal device, and the first terminal device belongs to a multicast group corresponding to the MBS;
receiving (S202), by the session management function (106), the location information of the first terminal device from the access management function (105); and
when the location information indicates a location of the first terminal device, and the session management function (106) determines, based on the location of the first terminal device, that the first terminal device is located outside a service area of the MBS, stopping (S203), by the session management function (106), sending data of the MBS to the first terminal device,
wherein the sending (S201), by a session management function (106), a first message to an access management function (105) based on context information of a multicast session corresponding to an MBS comprises:
if the context information comprises information about the service area of the MBS, sending, by the session management function (106), the first message to the access management function (105).

2. The method according to claim 1, wherein the first message carries identification information of the first terminal device.

3. The method according to claim 1 or 2, wherein the first message is a subscription message, and the subscription message is for subscribing to the location information of the first terminal device.

4. The method according to claim 3, wherein the subscription message carries information about the service area of the MBS.

5. The method according to any one of claims 1 to 4, wherein before the receiving (S202), by the session management function (106), the location information of the first terminal device from the access management function (105), the method further comprises:
receiving, by the session management function (106), a second message from the first terminal device, wherein the second message is for requesting to join the multicast session; or
receiving, by the session management function (106), a third message from a multicast and broadcast session management function (106), wherein the third message is for updating the service area of the MBS.

6. The method according to any one of claims 1 to 5, wherein the sending (S201) a first message to an access management function (105) further comprises:
if the first terminal device receives the data of the MBS through individual delivery, sending the first message to the access management function (105).

7. A communication apparatus (1100), comprising a processor (1101), wherein the processor (1101) is coupled to a memory (1102);
the memory (1102) stores a computer program or instructions (1104); and
the processor (1101) is configured to execute the computer program or the instructions (1104) in the memory (1102), to enable the apparatus (1100) to perform the method according to any one of claims 1 to 6.

8. A computer-readable storage medium, comprising a computer program or instructions, wherein when the computer program or the instructions is or are run on a computer, the method according to any one of claims 1 to 6 is performed.

9. A communication system, wherein the communication system comprises a session management function (106) and an access management function (105); wherein
the communication apparatus (1100) according to claim 7 is configured to perform as the session management function (106);
the access management function (105) is configured to receive the first message, and send the location information of the first terminal device to the session management function (106).

## Patentansprüche

1. Datenkommunikationsverfahren, **dadurch gekennzeichnet, dass** es Folgendes umfasst:
Senden (S201), durch eine Sitzungsverwaltungsfunktion (106), einer ersten Nachricht an eine Zugriffsverwaltungsfunktion (105) basierend auf Kontextinformationen einer verwalteten Gruppenrufsitzung, die einem Gruppenruf- und Rundrufdienst, MBS, entspricht, wobei die erste Nachricht zum Auslösen einer Meldung von Standortinformationen eines ersten Endgeräts dient und das erste Endgerät zu einer Gruppenrufgruppe gehört, die dem MBS entspricht;
Empfangen (S202), durch die Sitzungsverwaltungsfunktion (106), der Standortinformationen des ersten Endgeräts von der Zugriffsverwaltungsfunktion (105); und
wenn die Standortinformationen einen Standort des ersten Endgeräts anzeigen und die Sitzungsverwaltungsfunktion (106) basierend auf dem Standort des ersten Endgeräts bestimmt, dass sich das erste Endgerät außerhalb eines Dienstbereichs des MBS befindet, Beenden (S203), durch die Sitzungsverwaltungsfunktion (106), eines Sendens von Daten des MBS an das erste Endgerät,
wobei das Senden (S201), durch eine Sitzungsverwaltungsfunktion (106), einer ersten Nachricht an eine Zugriffsverwaltungsfunktion (105) basierend auf Kontextinformationen einer Gruppenrufsitzung, die einem MBS entspricht, Folgendes umfasst:
wenn die Kontextinformationen Informationen über den Dienstbereich des MBS umfassen, Senden, durch die Sitzungsverwaltungsfunktion (106), der ersten Nachricht an die Zugriffsverwaltungsfunktion (105).

2. Verfahren nach Anspruch 1, wobei die erste Nachricht Identifikationsinformationen des ersten Endgeräts enthält.

3. Verfahren nach Anspruch 1 oder 2, wobei die erste Nachricht eine Abonnementnachricht ist und die Abonnementnachricht zum Abonnieren der Standortinformationen des ersten Endgeräts dient.

4. Verfahren nach Anspruch 3, wobei die Abonnementnachricht Informationen über den Dienstbereich des MBS enthält.

5. Verfahren nach einem der Ansprüche 1 bis 4, wobei das Verfahren vor dem Empfangen (S202), durch die Sitzungsverwaltungsfunktion (106), der Standortinformationen des ersten Endgeräts von der Zugriffsverwaltungsfunktion (105) ferner Folgendes umfasst:
Empfangen, durch die Sitzungsverwaltungsfunktion (106), einer zweiten Nachricht von dem ersten Endgerät, wobei die zweite Nachricht zum Anfragen dient, an der Gruppenrufsitzung teilzunehmen; oder
Empfangen, durch die Sitzungsverwaltungsfunktion (106), einer dritten Nachricht von einer Gruppenruf- und Rundrufsitzungsverwaltungsfunktion (106), wobei die dritte Nachricht zum Aktualisieren des Dienstbereichs des MBS dient.

6. Verfahren nach einem der Ansprüche 1 bis 5, wobei das Senden (S201) einer ersten Nachricht an eine Zugriffsverwaltungsfunktion (105) ferner Folgendes umfasst:
wenn das erste Endgerät die Daten des MBS durch Einzelübermittlung empfängt, Senden der ersten Nachricht an die Zugriffsverwaltungsfunktion (105).

7. Kommunikationsvorrichtung (1100), umfassend einen Prozessor (1101), wobei der Prozessor (1101) mit einem Speicher (1102) gekoppelt ist;
der Speicher (1102) ein Computerprogramm oder Anweisungen (1104) speichert; und
der Prozessor (1101) dazu konfiguriert ist, das Computerprogramm oder die Anweisungen (1104) in dem Speicher (1102) auszuführen, um die Vorrichtung (1100) in die Lage zu versetzen, das Verfahren nach einem der Ansprüche 1 bis 6 durchzuführen.

8. Computerlesbares Speichermedium, umfassend ein Computerprogramm oder Anweisungen, wobei, wenn das Computerprogramm oder die Anweisungen auf einem Computer läuft oder laufen, das Verfahren nach einem der Ansprüche 1 bis 6 durchgeführt wird.

9. Kommunikationssystem, wobei das Kommunikationssystem eine Sitzungsverwaltungsfunktion (106) und eine Zugriffsverwaltungsfunktion (105) umfasst; wobei
die Kommunikationsvorrichtung (1100) nach Anspruch 7 dazu konfiguriert ist, als die Sitzungsverwaltungsfunktion (106) zu arbeiten; und
die Zugriffsverwaltungsfunktion (105) dazu konfiguriert ist, die erste Nachricht zu empfangen und die Standortinformationen des ersten Endgeräts an die Sitzungsverwaltungsfunktion (106) zu senden.

## Revendications

1. Procédé de communication de données, **caractérisé en ce qu'**il comprend :
l'envoi (S201), par une fonction de gestion de session (106), d'un premier message à une fonction de gestion d'accès (105) sur la base d'informations de contexte d'une session de multidiffusion gérée correspondant à un service de multidiffusion et de diffusion, MBS, dans lequel le premier message est destiné à déclencher le rapport d'informations de localisation d'un premier dispositif terminal, et le premier dispositif terminal appartient à un groupe de multidiffusion correspondant au MBS ;
la réception (S202), par la fonction de gestion de session (106), des informations de localisation du premier dispositif terminal provenant de la fonction de gestion d'accès (105) ; et
lorsque les informations de localisation indiquent un emplacement du premier dispositif terminal, et que la fonction de gestion de session (106) détermine, sur la base de l'emplacement du premier dispositif terminal, que le premier dispositif terminal est situé en dehors d'une zone de service du MBS, l'arrêt (S203), par la fonction de gestion de session (106), de l'envoi de données du MBS au premier dispositif terminal,
dans lequel l'envoi (S201), par une fonction de gestion de session (106), d'un premier message à une fonction de gestion d'accès (105) sur la base d'informations de contexte d'une session multidiffusion correspondant à un MBS comprend :
si les informations de contexte comprennent des informations concernant la zone de service du MBS, l'envoi, par la fonction de gestion de session (106), du premier message à la fonction de gestion d'accès (105).

2. Procédé selon la revendication 1, dans lequel le premier message contient des informations d'identification du premier dispositif terminal.

3. Procédé selon la revendication 1 ou 2, dans lequel le premier message est un message d'abonnement, et le message d'abonnement est destiné à s'abonner aux informations de localisation du premier dispositif terminal.

4. Procédé selon la revendication 3, dans lequel le message d'abonnement contient des informations concernant la zone de service du MBS.

5. Procédé selon l'une quelconque des revendications 1 à 4, dans lequel, avant la réception (S202), par la fonction de gestion de session (106), des informations de localisation du premier dispositif terminal provenant de la fonction de gestion d'accès (105), le procédé comprend également :
la réception, par la fonction de gestion de session (106), d'un deuxième message provenant du premier dispositif terminal, dans lequel le deuxième message est destiné à demander de rejoindre la session de multidiffusion ; ou
la réception, par la fonction de gestion de session (106), d'un troisième message provenant d'une fonction de gestion de session (106) de multidiffusion et de diffusion, dans lequel le troisième message est destiné à mettre à jour la zone de service du MBS.

6. Procédé selon l'une quelconque des revendications 1 à 5, dans lequel l'envoi (S201) d'un premier message à une fonction de gestion d'accès (105) comprend également :
si le premier dispositif terminal reçoit les données du MBS par livraison individuelle, l'envoi du premier message à la fonction de gestion d'accès (105).

7. Appareil (1100) de communication, comprenant un processeur (1101), dans lequel le processeur (1101) est couplé à une mémoire (1102) ;
la mémoire (1102) stocke un programme informatique ou des instructions (1104) ; et
le processeur (1101) est configuré pour exécuter le programme informatique ou les instructions (1104) dans la mémoire (1102), pour amener l'appareil (1100) à réaliser le procédé selon l'une quelconque des revendications 1 à 6.

8. Support de stockage lisible par ordinateur, comprenant un programme informatique ou des instructions, dans lequel, lorsque le programme informatique ou les instructions est ou sont exécuté(es) sur un ordinateur, le procédé selon l'une quelconque des revendications 1 à 6 est réalisé.

9. Système de communication, dans lequel le système de communication comprend une fonction de gestion de session (106) et une fonction de gestion d'accès (105) ; dans lequel
l'appareil (1100) de communication selon la revendication 7 est configuré pour fonctionner comme fonction de gestion de session (106) ; et
la fonction de gestion d'accès (105) est configurée pour recevoir le premier message et envoyer les informations de localisation du premier dispositif terminal à la fonction de gestion de session (106).
